# EUROPEAN PATENT APPLICATION

(11) **EP 3 819 610 A1**
(43) Date of publication of application: **12.05.2021**
(21) Application number: 20203315.5
(22) Date of filing: 22.10.2020
(51) Int. Cl.: G01H 17/00

(54) **CARGO MONITORING SYSTEM AND METHOD**

(30) Priority: 08.11.2019 US 201962932797 P
(71) Applicant: Carrier Corporation, Palm Beach Gardens, FL 33418 (US)
(72) Inventor: NUNES, Peter M., Palm Beach Gardens, FL Florida 33418 (US); WALD, Robin L., Palm Beach Gardens, FL Florida 33418 (US); DAY, Eric, Palm Beach Gardens, FL Florida 33418 (US); BORENSTEIN, Peter, Palm Beach Gardens, FL Florida 33418 (US); SHOEMAKER, Thomas, Palm Beach Gardens, FL Florida 33418 (US); ANDREYEVA, Natalia, Palm Beach Gardens, FL Florida 33418 (US)
(74) Representative: Dehns

(57) **Abstract**

A method 100 of monitoring a cargo area 10 includes receiving sound data 102 at a sound sensor 18a situated in a cargo area 10, analyzing the sound data 106, and reporting a condition 108 of the cargo area 10 based on the analysis. A monitoring system for a cargo area 10 is also disclosed.

## Description

Many goods are shipped via truck, train, or other methods, and/or stored in areas that benefit from monitoring for tracking and/or maintenance of conditions to preserve the goods. For instance, the monitoring may include detecting and reporting the location of the goods during a shipment, which can be provided to shippers and/or customers (e.g., the sender or recipients of the goods). Some goods, such as perishable or fragile goods, may be monitored to ensure the conditions of the goods during the shipment or storage prevent spoilage, breakage, or other damage to the goods.

Even with various existing monitoring capabilities, those skilled in the art have been striving to improve shipment monitoring.

According to a first aspect, there is provided a method of monitoring a cargo area comprising: receiving sound data at a sound sensor situated in a cargo area, analyzing the sound data, and reporting a condition of the cargo area based on the analysis.

Optionally, the analysis includes matching the sound data to pre-programmed sound data.

Optionally, the analysis includes comparing the sound data to predetermined volume or frequency ranges.

Optionally, a notification is sent about the condition.

Optionally, the sound data includes at least one of external sound data, conditioner sound data, and cargo area sound data.

Optionally, external sound data includes at least one of sound data indicative of a weather condition and sound data indicative of a location.

Optionally, the conditioner sound data includes sounds of operation of a refrigeration unit.

Optionally, the sounds of operation of a refrigeration unit include operation of at least one of a compressor and a bearing in the refrigeration unit.

Optionally, the analysis includes matching the sound data to pre-programmed sound data, and the pre-programmed sound data may correspond to a specific make or model of the refrigeration unit.

Optionally, the type of vehicle the cargo area is in is determined based on the cargo area sounds.

Optionally, the sound sensor is a first sensor, and may further include one or more additional sensors (one or more additional sensors may be provided). Analyzing may include analyzing the sound data based on data from a GPS device in conjunction with the sound data.

Optionally, the sound sensor is a first sensor, and may further include one or more additional sensors (one or more additional sensors may be provided). Analyzing may include analyzing the sound data based on data from the one or more additional sensors in conjunction with the sound data.

Optionally, the method includes waking the sound sensor. The waking may include comparing a sound frequency/volume to a predetermined threshold frequency/volume.

According to a further aspect, there is provided a monitoring system for a cargo area comprising: a sound sensor situated in a cargo area and configured to receive sound data; and a processor configured to receive the sound data from the sound sensor, analyze the sound data, and report a condition of the cargo area based on the analysis.

Optionally, the sound sensor is a first sensor, and may further include one or more additional sensors (one or more additional sensors may be provided). The processor may be configured to analyze the sound data based on data from the one or more additional sensors in conjunction with the sound data.

Optionally, the monitoring system includes a GPS device. The processor may be configured to analyze the sound data based on data from the GPS device in conjunction with the sound data.

Optionally, the processor is in the cargo area.

Optionally, the processor is in a remote server.

Optionally, the processor is configured to filter the sound data.

Optionally, the cargo area includes one or more conditioners. The sound sensor may be configured to receive sound data from the one or more conditioners.

Various features and advantages of at least one disclosed example embodiment will become apparent to those skilled in the art from the following description.

Certain exemplary embodiments will now be described in greater detail by way of example only and with reference to the accompanying drawings in which:
Fig. 1 schematically shows a cargo area with a monitoring system; and
Fig. 2 schematically shows a method of monitoring the cargo area.

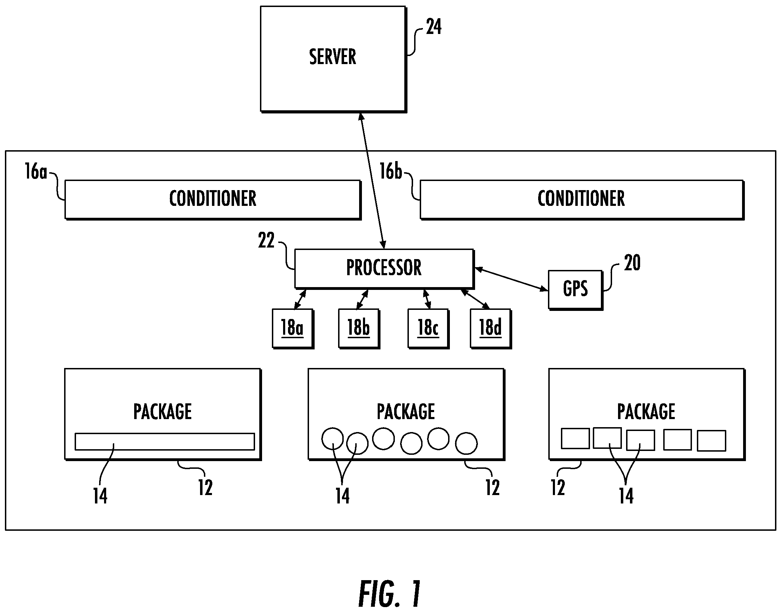

Fig. 1 schematically shows a cargo area 10. The cargo area 10 can be a cargo area for a truck, train, airplane, or ship, for example. "Cargo area" as used herein is not limited to a cargo area in a vehicle, and can be a cargo area in a trailer or other structure that is hauled/moved by a vehicle. Moreover, "cargo area" can include storage areas where goods are stored, or other areas that include equipment that benefits from monitoring as discussed herein.

One or more packages 12 is in the cargo area 10. The packages 12 can be shipments, for instance, and include various types of goods 14. In other examples, the packages 12 are packages of stored goods 14. In this example, the goods 14 are condition-sensitive. That is, conditions (e.g., temperature, humidity, etc.) in the cargo area 10 must be maintained within pre-determined conditions to ensure that goods 14 do not spoil or otherwise become damaged. One example condition-sensitive good 14 is perishable food items, which much be kept cold during shipment. Some condition-sensitive goods 14 are also time-sensitive. That is, shipping of the goods 14 must be completed within a certain period of time in order to maintain the usable life of the goods upon arrival to the intended recipient of the goods 14.

The cargo area 10 includes or more conditioners 16. In this example, the conditioners include a refrigeration unit 16a and a humidifier/dehumidifier 16b, though other conditioners are contemplated as would be known in the art. For instance, a cargo area 10 with goods 14 that are pressure-sensitive may include a pump and/or vent to maintain a pre-determined desired pressure in the cargo area 10.

The cargo area 10 also includes a monitoring system with one or more sensors 18. One sensor 18a is a sound sensor (e.g., an audio transducer or microphone). The sensors 18 can also include, for example, a temperature sensor 18b, a humidity sensor 18c, an accelerometer 18d, and/or other sensors as would be known in the art based on the goods 14 and conditioners 16 as discussed above. For instance, in the example above where the goods 14 include pressure-sensitive goods, the sensors 18 can include a pressure sensor.

The cargo area 10 also includes a GPS device 20 in some examples. In another example, the GPS device 20 is included on a shipment 12. In yet another example, the GPS device 20 is included in the vehicle (not shown) hauling/moving the cargo area 10, e.g., in the cab of a truck.

The sensors 18 and the GPS device 20 are in communication with a processor 22. The processor 22 is in communication with a remote server 24, such as a cloud-based server. In another example, the processor 22 is remote from the sensors 18 and GPS device 20, e.g., the processor 22 is in the remote server 24. The processor 22 is a computing device that includes hardware and/or software such that the processor 22 is configured to receive and analyze data from the sensors 18 and GPS device 20, and determine tracking/status information about the packages 12 in the cargo area 10, as will be discussed in more detail below. The remote server 24 can then send tracking/status information from the processor 22 to senders, intended recipients, and/or owners of the packages 12.

The audio transducer 18a receives and/or records sounds in or near the cargo area 10. The audio transducer 18a communicates the sounds to the processor 22. The sounds in/near the cargo area 10 include exterior sounds, conditioner sounds, and cargo area sounds. The processor 22 is configured to analyze the sounds received from the audio transducer 18a to identify various exterior sounds, conditioner sounds, and cargo area sounds, and to report conditions based on the analysis.

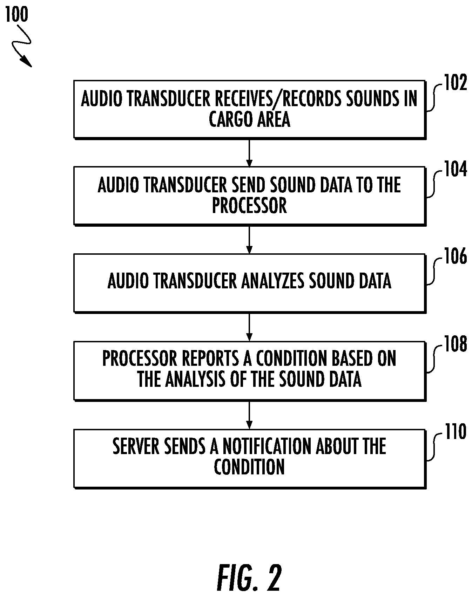

Fig. 2 schematically shows a method 100 of monitoring the cargo area 10. In step 102, the audio transducer 18a receives and/or records sounds. In step 104, the audio transducer 18a sends the sound data to the processor 22. In step 106, the processor 22 analyzes the sound data. In step 108, the processor 22 reports a condition based on the analysis of the sound data. In step 110, the server 24 sends a notification about the condition. Each of these steps is discussed in more detail below.

The exterior sounds can include sounds related to external weather conditions (e.g., rain). The exterior sounds can also include sounds indicative of certain landmarks, such as airports, sea ports, docking facilities, train stations, etc. For instance, sounds of airplanes taking off/landing are indicative of proximity to an airport. The audio transducer 18a captures the exterior sounds and sends them to the processor 22. The processor 22 analyzes the sound data from the audio transducer 18a to determine real-time tracking information for the shipments 12, which can include weather information and/or location information. The processor 22 may perform the analysis of the exterior sound data based on pre-programmed sound information. For instance, the processor 22 may be pre-programmed with the sound of rain, and configured to determine that there is rain at the cargo area 10 by comparing the exterior sound data with the pre-programmed sound. The comparing can include comparing digitized waveforms that are generated by the processor 22 and that represent the sound data gathered by the audio transducer 18a and/or digitized waveforms that are pre-programmed into the processor 22. The processor 22 reports indications from the exterior sounds, e.g., external weather conditions and/or location.

In some examples, the processor 22 is configured to determine the proximity to a landmark based on the volume and/or clarity of the external sounds. The processor 22 may also be configured to analyze the exterior sounds in conjunction with data from the GPS 20. For instance, the processor 22 may make a preliminary determination of the location of the cargo area 10 based on the exterior sound data from the audio transducer 18a and perform a check/verification of the preliminary determination based on data from the GPS device 20, or vice versa. In another example, the exterior sound data from the audio transducer 18a and the GPS device 20 data provide a redundancy in case of failure of one of the audio transducer 18a or GPS device 20.

The conditioner sounds include sounds of the conditioners 16a/16b. The processor 22 receives and analyzes the conditioner sounds from the audio transducer 18a to determine whether the conditioners 16a/16b are operated as expected. For instance, the processor 22 determines whether the conditioners are operating in a normal mode or a fault mode and reports the mode.

In a particular example, for a refrigeration unit 16a, the conditioner sounds can include the sound of a compressor of the refrigeration unit 16a operating. Typically, the compressor cycles on and off, and the duration of each cycle is based on the required cooling for the cargo area 10. The audio transducer 18a receives and/or records the sound of the compressor operating, and sends the sound data to the processor 22. The processor 22 may be pre-programmed with the sound of the refrigeration unit 16a compressor operating and determine when the compressor is operating by comparing the conditioner sound data from the audio transducer 18a to the pre-programmed sounds. The comparing can include comparing digitized waveforms that are generated by the processor 22 and that represent the sound data gathered by the audio transducer 18a and/or digitized waveforms that are pre-programmed into the processor 22.

In a further example, the pre-programmed data is specific to the make, model, and/or type of the conditioner 16. Particular refrigeration units 16a may have certain operating sounds, e.g., the sound of the compressor, bearings, or other parts, that are unique to the make/model/type of refrigeration unit. The pre-programmed data could include an identifier of make/model/type of refrigeration unit that is present in the cargo area 10. In this way, sound data from the audio transducer 18a can be better matched to the pre-programmed sound data for improved accuracy of identification/reporting of information about the operation of the refrigeration unit 16a as discussed above.

The processor 22 analyzes the sound to determine the operating mode of the refrigeration unit 16a, e.g., whether the refrigeration unit 16a is operating in a normal mode as would be expected for a pre-determined cooling requirement or whether the refrigeration unit 16a is operating in a fault mode. For instance, the processor 22 is programmed with or determines a predetermined range of compressor cycle frequency and duration that would provide adequate cooling for the cargo area 10. The predetermined range may be based on information from the temperature and/or humidity sensors 18b/18c. In this example, the processor 22 is configured to determine actual compressor cycle frequency and duration based on the conditioner sound data from the audio transducer 18a, and compare the actual cycle frequency to the predetermined ranges. If the actual cycle frequency/duration is outside of the predetermined ranges, the processor 22 reports a fault operating mode for the refrigeration unit 16a.

In another example, the processor 22 is configured to identify other sounds indicative of conditioner 16 failure. For instance, for a refrigeration unit 16a, the processor 22 could be configured to identify the sound of bearings in the refrigeration unit malfunctioning, by comparison to pre-programmed sounds as discussed above.

Other conditioners 16 (such as those examples discussed above) may have various sounds associated with their operation that can also be detected by the audio transducer 18a and analyzed by the processor 22 to determine the operating mode of the conditioner 16 as discussed above.

The processor 22 may also be configured to analyze the conditioner sounds in conjunction with data from the other sensors 18. For instance, the processor 22 may make a preliminary determination of the operating mode of the conditioners 16 based on conditioner sound data from the audio transducer 18a and perform a check/verification of the preliminary determination based on data from the other sensors 18 (in this example, temperature and humidity sensors 18b/18c), or vice versa. In another example, the conditioner sound data from the audio transducer 18a and the other sensors 18 data provide a redundancy in case of failure of one of the audio transducer 18a or the other sensors 18.

The cargo area sounds include sounds related to the events in the cargo area 10. One example cargo area sound is the sound of a door of the cargo area 10 opening/closing. Another example cargo area sound is the sound of a good 14 falling/breaking. As above, the audio transducer 18a receives and/or records the cargo area sounds and sends them to the processor 22. The processor 22 is configured to analyze the cargo area sounds to determine, for instance, whether the door has been opened or a good has fallen/broken. In one example, the processor 22 is pre-programmed with cargo area sounds and matches the cargo area sound data from the audio transducer 18a with the pre-programmed sounds to identify the cargo area sounds. In another example, the cargo area sounds are associated with predetermined particular frequency/volume thresholds. For instance, a very loud sound above the predetermined frequency/volume threshold may be indicative of a good 14 falling/breaking. Accordingly, in this example, the processor 22 compares the cargo area sounds to the predetermined frequency/volume thresholds, and if the cargo area sounds 22 are above the predetermined thresholds, the processor 22 reports a fall event. The comparing can include comparing digitized waveforms that are generated by the processor 22 and that represent the sound data gathered by the audio transducer 18a and/or digitized waveforms that are pre-programmed into the processor 22.

In one example, the processor 22 is configured to determine in what type of vehicle the cargo area 10 is based on the cargo area sounds. For example, the processor 22 can identify a cargo area sound as a truck door opening/closing as discussed above to determine that the cargo area 10 is in a truck.

The processor 22 may also be configured to analyze the cargo area sounds in conjunction with data from the other sensors 18. For instance, the processor 22 may make a preliminary determination of the operating mode of the conditioners 16 based on conditioner sound data from the audio transducer 18a and perform a check/verification of the preliminary determination based on data from the other sensors 18 (in this example, accelerometer 18d, which senses bumps or the like), or vice versa. In another example, the conditioner sound data from the audio transducer 18a and the other sensors 18 data provide a redundancy in case of failure of one of the audio transducer 18a or the other sensors 18.

In one example, the processor 22 is configured to filter sound data from the audio transducer 18a according to known sound filtering techniques prior to the analysis of the sound data discussed above. For instance, the processor 22 can be configured to filter out normal traffic noise from the sound data.

The audio transducer 18a may operate in a sleep mode and an awake mode, to preserve battery life. The audio transducer 18a can be woken from the sleep mode by a sound that exceeds a predetermined frequency/volume threshold. The audio transducer 18a may include a processor that analyzes the frequency/volume of sounds by comparing them to the predetermine threshold frequency/volume and wakes the audio transducer 18a, or the analyzing/waking may be implemented at the processor 22. The comparing can include comparing digitized waveforms that are generated by the processor 22 and that represent the sound data gathered by the audio transducer 18a and/or digitized waveforms that are pre-programmed into the processor 22.

As discussed above, the processor 22 reports various conditions. The remote server 24 is configured to send a notification about the conditions reported by the processor 22. For instance, notifications can be sent to a shipper or intended recipient of the goods 14.

The preceding description is exemplary rather than limiting in nature. Variations and modifications to the disclosed examples may become apparent to those skilled in the art that do not necessarily depart from the scope of the claims.

## Claims

1. A method (100) of monitoring a cargo area (10), comprising:
receiving sound data (102) at a sound sensor (18a) situated in a cargo area (10);
analyzing the sound data (106); and
reporting a condition (108) of the cargo area (10) based on the analysis.

2. The method of claim 1, wherein the analysis includes:
matching the sound data to pre-programmed sound data; and/or
comparing the sound data to predetermined volume or frequency ranges.

3. The method (100) of claim 1 or 2, further comprising sending a notification (110) about the condition.

4. The method (100) of claim 1, 2 or 3, wherein the sound data includes at least one of external sound data, conditioner sound data, and cargo area sound data; and wherein external sound data optionally includes at least one of sound data indicative of a weather condition and sound data indicative of a location.

5. The method (100) of claim 4, wherein the conditioner sound data includes sounds of operation of a refrigeration unit (16a).

6. The method (100) of claim 5, wherein the sounds of operation of a refrigeration unit (16a) include operation of at least one of a compressor and a bearing in the refrigeration unit (16a), wherein the analysis optionally includes matching the sound data to pre-programmed sound data, and wherein the pre-programmed sound data optionally corresponds to a specific make or model of the refrigeration unit (16a).

7. The method (100) of any of claims 4 to 6, further comprising determining the type of vehicle the cargo area (10) is in based on the cargo area sounds.

8. The method (100) of any preceding claim, wherein the sound sensor (18a) is a first sensor, and further comprising one or more additional sensors (18b, 18c, 18d), wherein the analyzing includes analyzing the sound data based on:
data from a GPS device (20) in conjunction with the sound data; and/or
data from the one or more additional sensors (18b, 18c, 18d) in conjunction with the sound data.

9. The method (100) of any preceding claim, further comprising waking the sound sensor (18a), and the waking includes comparing a sound frequency/volume to a predetermined threshold frequency/volume.

10. A monitoring system for a cargo area (10), comprising:
a sound sensor (18a) situated in a cargo area (10) and configured to receive sound data; and
a processor (22) configured to receive the sound data from the sound sensor (18a), analyze the sound data, and report a condition of the cargo area (10) based on the analysis.

11. The monitoring system of claim 10, wherein the sound sensor (18a) is a first sensor, and further comprising one or more additional sensors (18b, 18c, 18d), wherein the processor (22) is configured to analyze the sound data based on data from the one or more additional sensors (18b, 18c, 18d) in conjunction with the sound data.

12. The monitoring system of claim 10 or 11, further comprising a GPS device (20), wherein the processor (22) is configured to analyze the sound data based on data from the GPS device (20) in conjunction with the sound data.

13. The monitoring system of claim 10, 11 or 12, wherein the processor (22) is in the cargo area (10) or a remote server (24).

14. The monitoring system of any of claims 10 to 13, wherein the processor (22) is configured to filter the sound data.

15. The monitoring system of any of claims 10 to 14, wherein the cargo area (10) includes one or more conditioners (16), and where the sound sensor (18a) is configured to receive sound data from the one or more conditioners (16).
